# EUROPEAN PATENT SPECIFICATION

(11) **EP 4 371 100 B1**
(45) Date of publication and mention of the grant of the patent: **27.08.2025**
(21) Application number: 22753630.7
(22) Date of filing: 15.07.2022
(51) Int. Cl.: G08G 5/51, B64F 1/36, H04W 4/029, H04W 4/40, H04W 64/00, B64F 1/00, B64F 1/20, G01S 5/12, G01S 13/02, G01S 13/72, G01S 13/76, G01S 13/934

(54) **SURVEILLANCE OF AIRPORT MANOEUVRING AREAS AND APRONS USING VISUAL AIDS AND SURVEILLANCE INFRASTRUCTURE**
ÜBERWACHUNG VON FLUGHAFENMANÖVRIERBEREICHEN UND SCHÜRZEN UNTER VERWENDUNG VISUELLER HILFSMITTEL UND ÜBERWACHUNGSINFRASTRUKTUR
SURVEILLANCE DES AIRES DE MANOEUVRE ET DES AIRES DE TRAFIC D'AÉROPORT À L'AIDE D'AIDES VISUELLES ET D'INFRASTRUCTURES DE SURVEILLANCE

(30) Priority: 16.07.2021 EP 21186216
(43) Date of publication of application: 22.05.2024
(73) Proprietor: ADB Safegate BV, 1930 Zaventem (BE)
(72) Inventor: MENÈ, Luca, Dubai (AE); JELU, André, 3320 Hoegaarden (BE); LE ROUX, Martin, 3040 Huldenberg (BE)
(74) Representative: AWA Benelux
(86) International application number: PCT/EP2022/069837
(87) International publication number: WO 2023/285644

(56) References cited:
- CN-A- 107 820 215
- CN-A- 110 510 142
- US-A1- 2005 140 540
- US-A1- 2007 197 229
- US-A1- 2017 212 210
- GEZICI S ET AL: "Localization via ultra-wideband radios", IEEE SIGNAL PROCESSING MAGAZINE, IEEE, USA, vol. 22, no. 4, 1 July 2005 (2005-07-01), pages 70 - 84, XP011135197, ISSN: 1053-5888, DOI: 10.1109/MSP.2005.1458289

## Description

### Technical field

The present invention is related to an ultra-wideband based positioning system integrated into an airfield lighting device of at least one entity on an airport field and a surveillance system for an airport comprising said positioning system.

### Background art

The main goal of air traffic surveillance is to provide safe and efficient movement of passengers from a departure point A to a destination point B across the globe. Historically, Air Traffic Surveillance (ATS) has been achieved through the use of radars in conjunction with the radio communication between pilots and air traffic controllers. A surveillance system is typically required to provide periodically an accurate estimate of the position of all targets within the area of responsibility and possibly identification and altitude of each detected entity, a.k.a. target.

Traditional ATC (Air Traffic Control) radars, called primary radars, are provided with a rotating antenna which transmits continuously radar pulses and receives back the return energy (radar echo) reflected by any entity (target) within their coverage volume. The range of the target is then calculated by the two-way time of flight while the bearing of the target is based on the current antenna position. Such radars allow detection and ranging of any target with a certain level of reflectivity (radar cross section) based on their distance. These radars do not provide either altitude or identification of targets.

Because of the above limits of standard primary radars, cooperative sensors were introduced in the ATC scenario in the early 1960's. Cooperative sensors, also called secondary surveillance radars (SSR), were developed to improve the ATC surveillance proving, in addition to an extended coverage, additional surveillance data, mainly target identification and altitude. The main difference between primary radars and cooperative sensors was the need of an onboard "cooperative" equipment, the aircraft transponder, able to respond to the secondary radar interrogations and transmit back the additional information. Limit of this technology was the fact that the non-cooperative targets (either no transponder or transponder off) cannot be detected.

Several forms of cooperative technologies were developed since then which could work either stand alone or integrated with primary surveillance, although the combination of primary and secondary surveillance guarantees the optimal solution because it takes advantage of both the higher safety of primary surveillance and higher performance of secondary surveillance.

With the introduction of the A-SMGCS System (Advanced surface movement guidance and control system), ground surveillance systems started to play a major role and two main technologies were introduced: Surface Movement Radars (SMRs), also called Ground Movement Radars (GMR) or Airport Surface Detection Equipment (ASDE), as primary surveillance source, and the Multilateration system (MLAT) as main secondary surveillance source. In addition, the MLAT systems are typically provided with an ADS-B (Automatic Dependent Surveillance-Broadcast) channel which receives the aircraft GPS position from the aircraft transponders and handles it as an additional, independent secondary surveillance source, which in this case is cooperative and "dependent", as the quality of the surveillance data relies on the accuracy of the aircraft navigation system, causing some major safety concerns.

A Multi Sensor Fusion system can be installed in the ATC to integrate and fuse then the surveillance data coming from the different systems (MLAT and one or more SMRs).

Definition - Visual Aids (a.k.a. airport signalling device) are any device used providing visual guidance to pilots for landing, take off and ground movement until the park position of the aircraft. Visual Aids comprise Aeronautical Ground lighting (AGL) lights and Visual Docking Guidance Systems (VDGS).

CN110510142 A discloses an airport luggage transport vehicle remote positioning using ultra-wide band signals. US 2005/0140540 A1 discloses an airport surface target tracking system using a network of distributed multilateration sensors and distributed W-band radar sensors.

### Limitations and drawbacks of the standard ground surveillance technologies.

Standard ground surveillance systems have several drawbacks. First of all, both SMR and MLAT/ADS-B technologies are quite expensive and as mentioned before the combination of both is required in order to take advantage of the higher performance of the secondary surveillance (MLAT) and the higher safety of the primary surveillance. In addition, the cost for civil and electrical works required to install the systems and to provide them with network connection to the Air Traffic Control Tower typically is almost comparable to the cost of the procurement of the systems. Indeed, for coverage and redundancy reasons, medium/large size airports require typically a large set of MLAT sensors (above 30) and more than 1 SMRs per runway. Each SMR typically also requires the construction of a radar tower 20/30 m high and related equipment shelter. Such high cost for procurement installation and deployment of these surveillance systems represent a high limit in the development or upgrade of the ground surveillance systems in several airports.

From a technical point of view, it is important to notice that SMR coverage is typically limited to the manoeuvring areas, so all the apron and parking areas are excluded as too "cluttered" and also MLAT performance are typically affected in apron areas where the number of obstacles and reflecting elements increase dramatically. The international standards (ED-87C) require an overall positional accuracy of 12.5m in 95% of the cases in the manoeuvring areas, 20m in 95% of the cases in the apron taxiways and aircraft stand taxi lanes and 25m in 95% of the cases at the stands.

By manoeuvring area is meant the part of an aerodrome to be used by aircraft for take-off, landing, and taxiing, excluding aprons and areas designed for maintenance of an aircraft.

Due to the difficulty in covering aprons and parking areas many airports have often to implement video coverage of specific areas of the airport to remedy the low accuracy or eventual coverage gaps of the surveillance systems. This solution has also its weak points though, especially during bad weather conditions, and increases the already high costs of the surveillance systems as well as their maintenance costs.

### Summary of the invention

There is therefore a need in the art of providing an aerodrome accurate positioning system coverage. Equally, a need exists for an improved identification of the objects/persons, especially in apron area. There is also a need in the art of providing aerodrome positioning systems allowing easier maintenance and monitoring.

According to a first aspect of the invention, there is therefore provided an ultra-wideband positioning system for determining a position of at least one entity on an airport field

According to a second aspect of the invention, there is provided a surveillance system for an airport field according to claim 23 of the amended claims.

Advantageously, the above mentioned positioning system utilizing Ultrawideband technology integrated into airfield lighting devices installed in high numbers across the manoeuvring area of an airport provides both primary and secondary ground surveillance with a higher coverage, better positional accuracy of objects (Aircraft, Vehicle) or foreign object debris detection compared to classical surface movement technologies (MLAT , SMR).

### Brief description of the figures

Aspects of the invention will now be described in more detail with reference to the appended drawings, wherein same reference numerals illustrate same features and wherein:
Figure 1 represents a traditional air traffic control radar, also called primary radars, according to the state of the art.
Figure 2 represents a cooperative sensors, also called secondary surveillance radars (SSR), according to the state of the art.
Figure 3 represents a multi sensor fusion system of primary surface movement radars and an MLAT system, according to the state of the art.
Figure 4 represents an ultra-wideband positioning system according to the invention adapted to a runway.

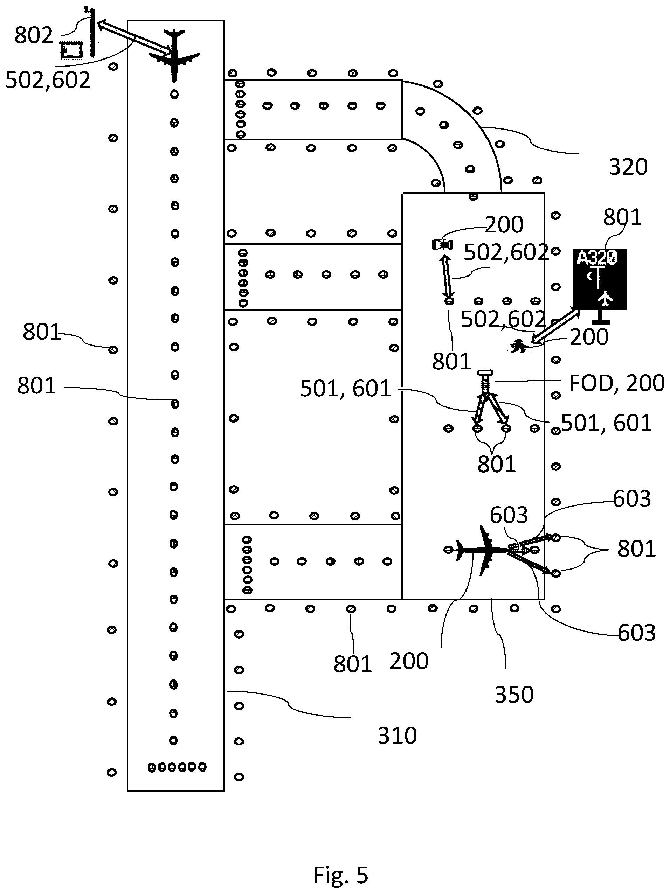

Figure 5 represents an ultra-wideband positioning system according to the invention adapted to an apron.
Figure 6 represents an ultra-wideband positioning system comprising a powerline communication operatively connecting ultra-wideband positioning units to a relay communication unit.
Figure 7 represents an ultra-wideband positioning system comprising an ultra-wideband communication network operatively connecting ultra-wideband positioning units to a relay communication unit.
Figure 8 represents an ultra-wideband positioning system comprising a wireless communication network operatively connecting ultra-wideband positioning units to a positioning determining unit.

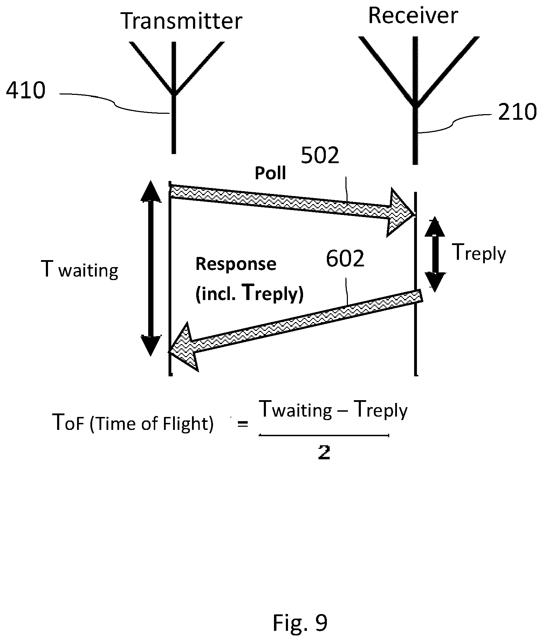

Figure 9 shows an ultra-wideband communication and ranging between peer devices.
Figure 10 shows an ultra-wideband application as secondary surveillance system.
Figure 11 illustrates an air traffic control ground surveillance based on an ultra-wideband positioning as an alternative or complementary to standard positioning.
Figure 12 illustrates an ultra-wideband application to restricted area alerts triggered by ultra-wideband detection.
Figure 13 shows an ultra-wideband application as an ADS-B validation via UWB detection.
Figure 14 shows an airport light-signalling device according to the invention.

### Detailed Description

This disclosure concerns the use of ultra-wideband devices 410, like a chip within airfield fixtures 801,802 such as airport signalling device 801 and/or airport surveillance stationary device 802 to transmit radar pulse signals 501, 502 and locate moving and fixed targets 200, also called entity with a high degree of accuracy. By ultra-wideband (UWB) is meant a pulse radio whose frequency lies in the range of 3.1 to 10.6 GHz range. By an airport signalling device (also known as signalling unit) 801 is meant a visual aid. We understand by an airport surveillance stationary device a fixture/device/apparatus dedicated to an airfield surveillance (e.g. camera, a multilateration antenna mast).

An ultra-wideband (UWB) transmitter/receiver module 410 such as transceiver is installed within the airfield visual aids 801 (e.g. runway lights, taxiway lights, elevated lights, approach lights, visual docking guidance system (VDGS), signs, etc.), hereby called UWB sensing visual aids 801.

In one embodiment, the sensing visual aid 801 transmits a radar pulse 501 signal which hits a target 200 in coverage and bounces back. The two-way time of flight of the radar signal 501, 601 is used to determine the ranging of the target 200.

Other techniques like angle of arrival estimation or use of multiple directional antennas are used to determine the bearing of the targets 200. The short pulses of UWB technology (order of nanoseconds) allow higher accuracy and resolution than standard ATC systems with no difference in performance between apron 350 and manoeuvring areas 310, 320.

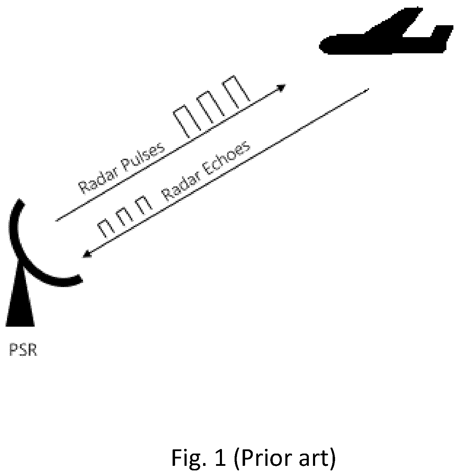

Fig. 1 shows a traditional ATC (Air Traffic Control) radars, called primary radars, provided with a rotating antenna which transmits continuously radar pulses and receives back the return energy (radar echo) reflected by any entity (target) within their coverage volume. The range of the target is then calculated by the two-way time of flight while the bearing of the target is based on the current antenna position. Such radars allow detection and ranging of any target with a certain level of reflectivity (radar cross section) based on their distance. These radars do not provide either altitude or identification of targets.

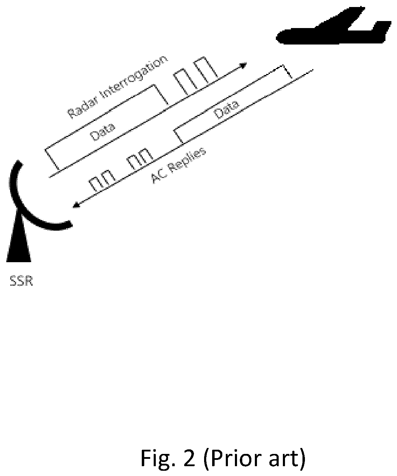

Fig. 2 shows a cooperative sensor, also called secondary surveillance radars (SSR). The main difference between primary radars and cooperative sensors is the need of an onboard "cooperative" equipment, the aircraft transponder, able to respond to the secondary radar interrogations and transmit back the additional information. Limit of this technology is the fact the non-cooperative targets (either no transponder or transponder off) cannot be detected.

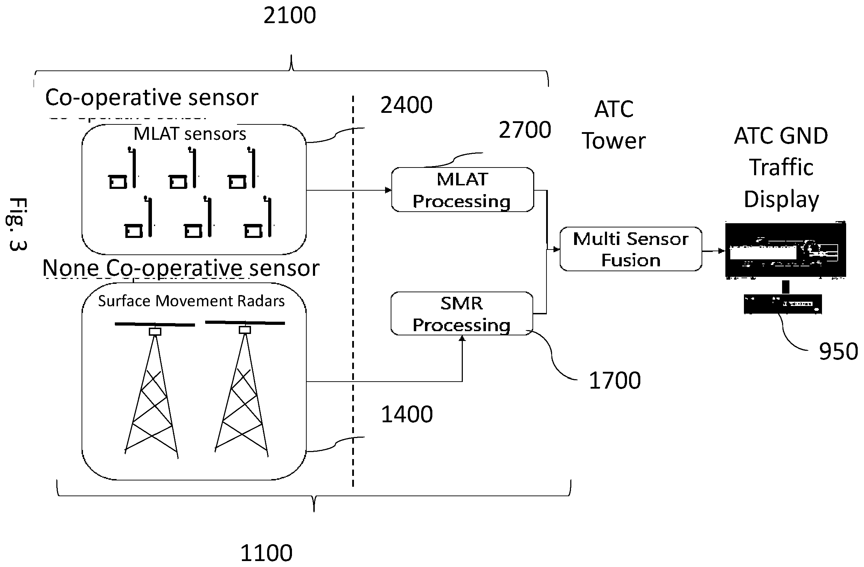

Fig. 3 shows a multi sensor fusion system installed in the ATC to integrate and fuse then the surveillance data coming from the different systems (MLAT and one or more SMRs). Surface Movement Radars (SMRs), also called Ground Movement Radars (GMRs) are used as primary surveillance source, and the Multilateration system (MLAT) as main secondary surveillance source. In addition, the MLAT systems are typically provided with an ADS-B (Automatic Dependent Surveillance-Broadcast) channel which receives the aircraft GPS position from the aircraft transponders and handle it as an additional, independent secondary surveillance source, which in this case is cooperative and "dependent", as the quality of the surveillance data rely on the accuracy of the aircraft navigation system, causing some major safety concerns.

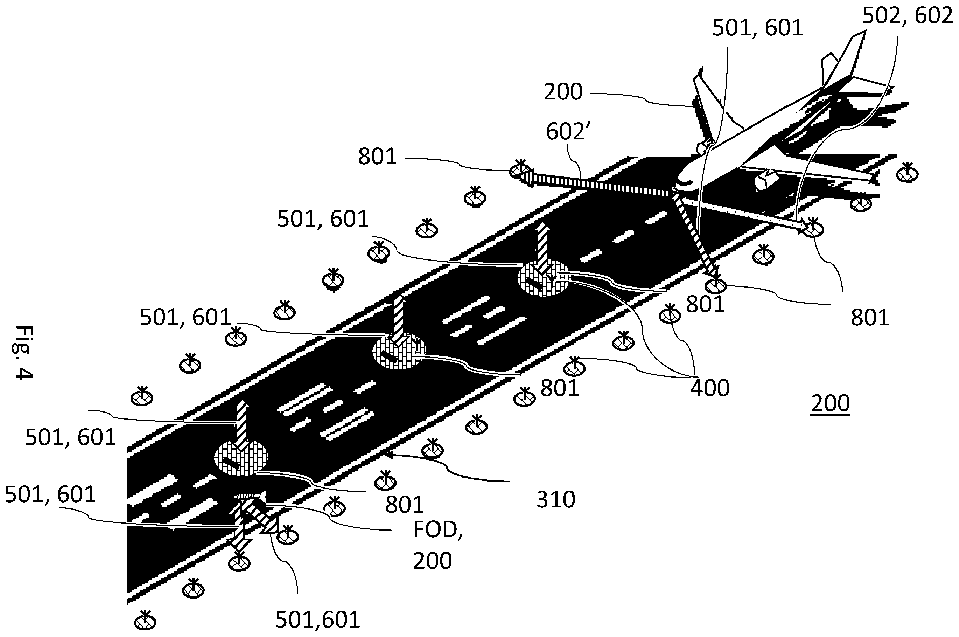

Fig. 4 represents an ultra-wideband positioning system according to the invention adapted to a runway 310. The moving entity is an airplane 200 and the runway 310 comprises grounded central lights 801 provided with UWB pulse radars 410 for detecting the passage of the airplane 200 using an outbound 501 and echoed return signal 601 (complementary or alternatively the grounded central lights 200 can be configured to send outbound poll 601 signal or receive return reply 602). The lights 801 disposed on both long sides in Fig. 4 are adapted to allow a positioning of the airplane, vehicle (not shown) or foreign object debris FOD 200. The positioning can performed through the calculation of the time of flight of either:
- the outbound 501 and return signals 601 bouncing on the airplane or foreign object debris FOD, or
- the outbound 601 poll and reply signal 601 sent by the airplane 200.
Furthermore, the lights 801 comprise UWB transceivers 410 adapted to receive an UWB signal 602' periodically sent from an onboard UWB transceiver of the airplane 200. The times of flights of the UWB signal 601 detected by the runway UWB transceivers 410 fixed to the lights 801 disposed on both long sides of the runway 310 are sent to a positioning determining unit 700 (not shown) where the exact coordinates of the airplane 200 are determined. These coordinates of the airplane 200 can be compared with those determined by the grounded central lights 801, enhancing the reliability of the positioning. The embodiment in Fig. 4 illustrates that lights 801 can perform both primary (via 501, 601 signals) and secondary surveillance (502, 602, 602') independently or complementary to surface movement radars (SMRs not shown in Fig. 4) and the multilateration system (MLAT not shown in Fig. 4), which are the traditional sensors for primary and secondary surveillance, respectively. Fig. 4 illustrates one way to carry out the invention. The scope of the invention should not be restricted to this advantageous embodiment since several modifications starting from Fig. 4 within the scope of the claims can be foreseen. For example the lights 801 can be used to monitor the positioning not only of airplanes 200 but also service vehicles, staff circulating on critical airfield areas (e.g. apron, taxiway).

Fig .5 represents another embodiment of the invention where the positioning units 400 are fixed to aeronautical ground lights 801 and spread over a runway 310, taxiways 320 and an apron 350. The positioning units 400 can perform both primary surveillance through detection of echoed signals 601 and secondary surveillance via reception of return signals 602 containing position and identification data. Furthermore, the positioning units 400 can be further configured to positioning an entity 200 using time of arrivals of returns signals 603.

The use of UWB signals guarantees also high resilience to multipath especially in busy airfield areas like aprons and parking stands. In addition, the system, thanks to the UWB technology, results also immune to interferences of other radio transmissions within the airport and secure against potential spoofing.

The installation of the surveillance within the AGL fixture 801 avoid the installation costs and guarantee a distribution of sensors across all manoeuvring areas and parking stands.

Furthermore, the power consumption of standard surveillance radars 1400, 2400 can be completely eliminated by the disclosed surveillance solutions guaranteeing also a huge step in the direction of green airfields.

This disclosure includes the possibility to connect all the sensing UWB visual aids 801 with a surveillance processing 900 able to combine data from all sensors 400 in a unique surveillance data output. The surveillance processing 900 may be able to combine the detections from all sensors 400 and accurately calculate also the size, the speed of the targets 200 and their direction. The data output may follow standard Eurocontrol format (Asterix) in order to be immediately compatible with the other ATC systems.

The size of the aircraft 200 may be calculated based on the amount and identity of the sensors 400 detecting the aircraft simultaneously.

The combination of such a large set of distributed UWB sensors 400 increases not only the overall accuracy but also the system probability of detection.

Furthermore, the high accuracy and resolution of UWB measures allow the use of this radar technology also for detection of Foreign Objects Debris 200 (FOD) which cause sever safety issues in airport operations and cause annually damages and delays.

The FOD detections and alerts may be presented to a dedicated HMI 950 (Human Machine Interface) for the airfield maintenance and safety teams.

The communication between sensing visual aids 801 and central surveillance processing 900 may be implemented via different communication links.

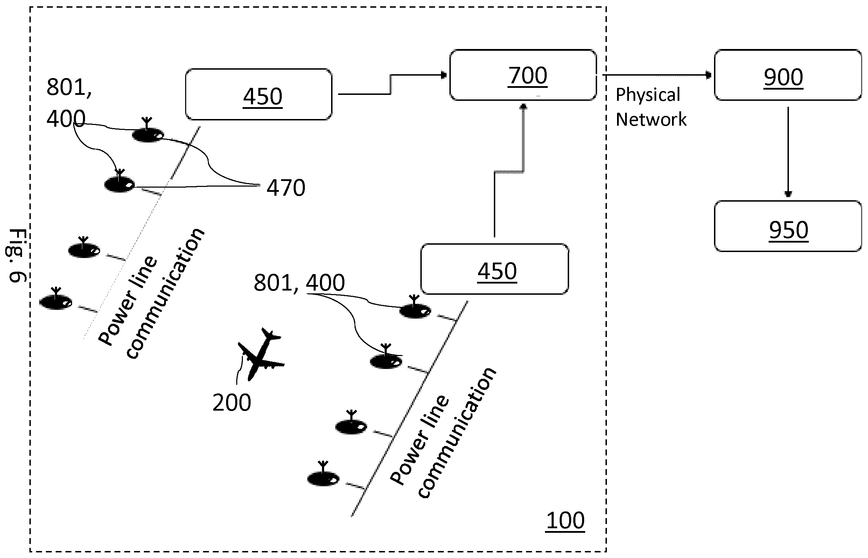

As a first option, the powerline communication channel used by the AGL equipment 801 may be used to connect the field sensors 400 via a communication interface 470 to a surveillance data receiving unit 450 in the AGL substations. This receiving unit 450 is then connected via physical network connection to the surveillance central processing 900, as shown in Fig. 6.

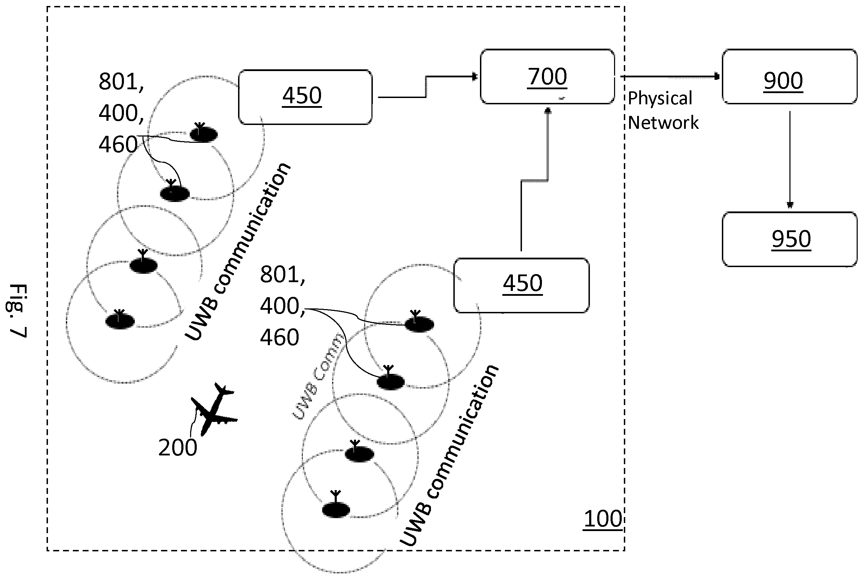

Alternatively or in addition to the previous paragraph, the UWB data communication capability 460 could be used to set up a dedicated network and transmit data from the UWB devices 410 to a receiving unit 450 in the substation, as shown in Fig. 7.

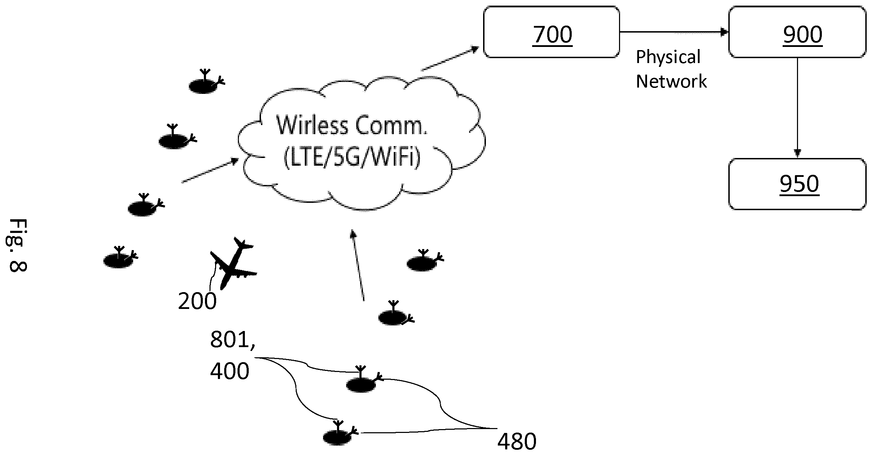

Alternatively or in addition to the previous paragraph, in case the visual aids 801 are equipped with LTE/5G modem 480, and there is an LTE/5G private network in place in the airport, the surveillance data can be transmitted wireless to the central processing 900 via the position determining unit (700), as shown in Fig. 8.

The present invention includes also the possibility to use the same UWB device 410 to locate and also identify other UWB peer devices 200 within its coverage range and use the UWB technology as an alternative to the standard 1090 MHz communication channel for ground cooperative surveillance.

The UWB visual aids 801 and the other UWB radios 410, for instance mounted airport surveillance stationary device 802 can initialize a communication exchange that is used for accurate ranging but also data exchange (e.g. target identification, target speed, target mission, target planned trajectory, etc.).

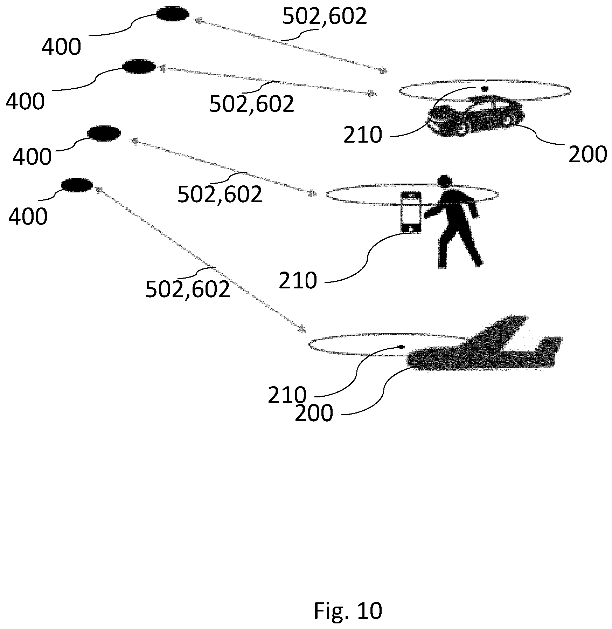

UWB devices 210 may be installed within any vehicle 200 accessing the airfield as a cheaper solution in alternative to expensive standard 1030-1090 MHz ADS-B transponders, as shown in Fig. 10.

In addition to lower costs, these new vehicle cooperative UWB will also avoid reduction of the utilization of the 1090 MHz band that is already quite congested by all the existing ground-air communications initiated by the secondary surveillance radars and MLAT systems as well as by the air-air communication between aircraft transponders (TCAS).

In addition, each physical person accessing the airfield may be provided with his own UWB device 210 in order to be detected and identified by the installed sensing UWB visual aids 801. Personal UWB devices 210 may be provided in either personal tags 200 or mobile phones 200 provided with UWB capability and dedicated mobile application, as shown in FIG. 10.

Similarly, the disclosed sensing devices are provided with the capability to detect and communicate with any aircraft 200 embarking a UWB device 210, as shown in FIG. 10.

This technique allows to combine the ranging of the same target 200 by several receivers 410 and calculate the target position accurately via triangulation or Time Difference of Arrival algorithms allowing to reach accuracy of the order of cm.

As an alternative, the angle of arrival can be measured by a single UWB sensor 400 with multiple antennas so that the bearing information together with the range information provide the exact location of the device 200.

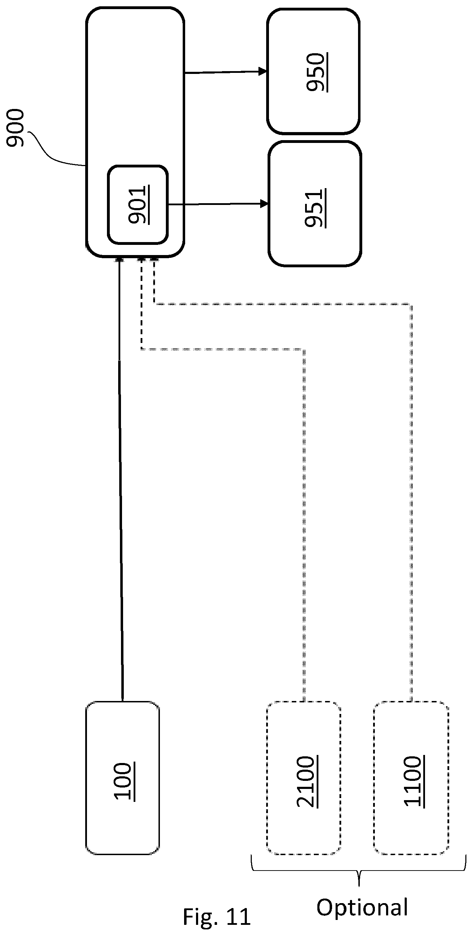

The combined use of this network of UWB sensing devices 400 for both primary surveillance (radar pulses 501, 502) and secondary surveillance (UWB ranging and communication between peer devices) forms a unique ground surveillance system capable to deliver with one single system both primary and secondary (cooperative) surveillance to ATC system, shown in FIG. 11.

The surveillance system 900 may produce a single output for both primary surveillance and secondary surveillance as well as a fused surveillance output that combine the surveillance data from both traditional surveillance chains 1100 , 2100, namely SMR and MLAT systems. All output may follow Eurocontrol Standard formats (Asterix).

Such combined surveillance system 900 will have a coverage of all ground maneuvering areas and all aprons and parking stands, as long as the UWB sensing visual aids 801 are installed instead of standard AGL fixtures.

The surveillance system 900 may further comprise a processing unit 901 dedicated to the monitoring of Foreign Object Debris FOD 200. A dedicated human machine interface HMI 951 for monitoring the foreign object debris FOD is connected to the surveillance system 900 so as to receive the data to be displayed, as shown in Fig. 11.

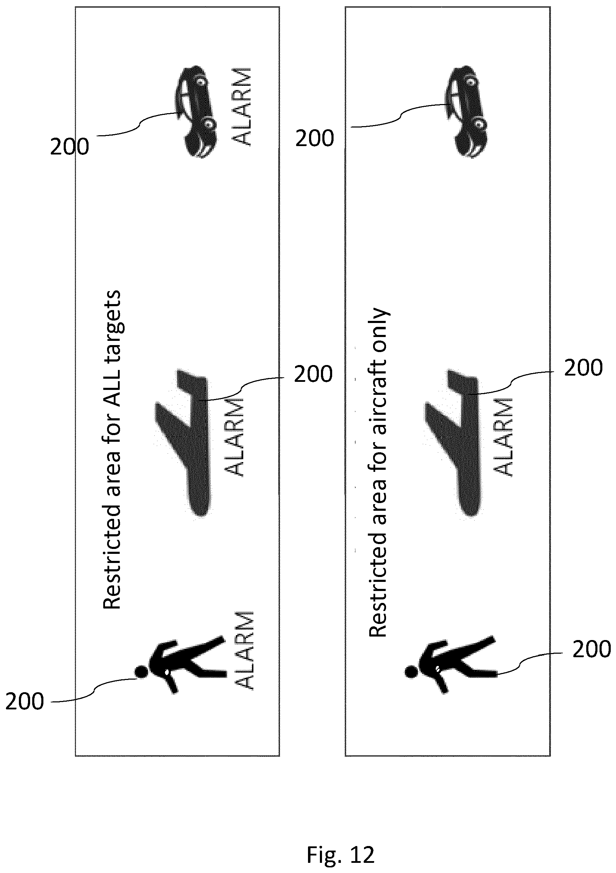

Detection and identification of UWB devices 210 may be used to create restricted areas of different topology (e.g. areas restricted only for aircraft of a certain wing-span, area restricted for aircraft and vehicles, area restricted for non-authorized ground personnel) in the airport and generate alarms and warning based on the role/identity of the device that may be displayed on the ATC controllers Human Machine Interfaces, shown in Fig. 12.

Similarly, detection and identification of UWB devices 210 may be used to generate runway incursion alarms and other airport safety nets.

Once an alarm is generated it may be displayed in the HMI 950 and associated to an audible signal until an ATC controller acknowledges it.

In addition, the UWB communication channel may be used to transmit the warning directly to the taxing crew of the aircraft or vehicle, if it embarks the UWB device 210.

The use of the UWB technology as a secondary surveillance source could also allow either the surveillance system 900 or the ATC sensor data fusion to use the UWB surveillance to validate the aircraft GPS position broadcast via ADS-B messages, guaranteeing a safe use of the ADS-B data for ground surveillance.

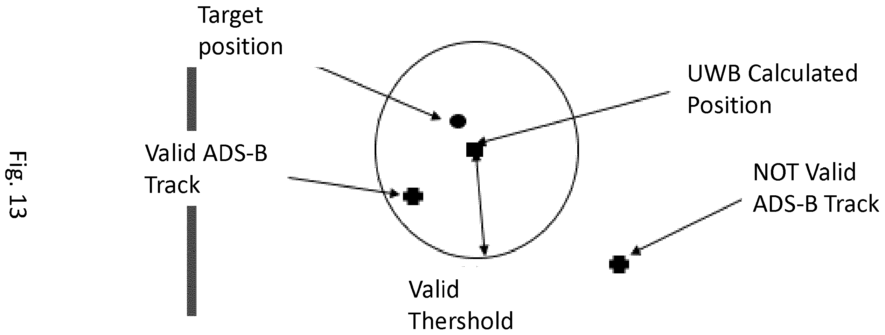

In order to validate the quality of the ADS-B data of each aircraft, the UWB detection has to be compared with the received ADS-B position and mark as valid the ADS-B positions which are within a certain range threshold from the correspondent UWB detection, as shown in Fig. 13.

Once an ADS-B transponder is marked as "valid", the system may keep its validity for a certain duration of time from the last validation, achieved via comparison with the UWB surveillance data.

The use of this disclosed validation technique may allow airport to overcome the safety issues related to the ADS-B technology and install standalone ADS-B system without the need for a full MLAT deployment for standard 1090 MHz cooperative surveillance, guaranteeing same or better performance with a much cheaper solution.

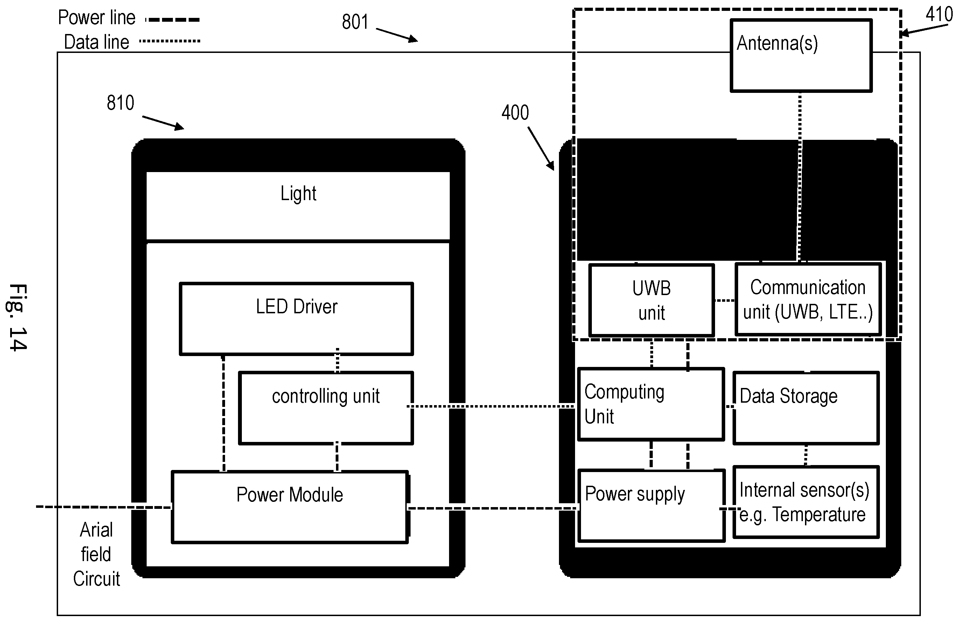

Fig. 14 shows an airport light-signalling device 801, in which a positioning unit, namely a ranging device 400 is integrated. The ranging device 400 comprises an ultra-wideband module 410 that is adapted to receive one or more ultra-wideband pulse radio signals emitted or echoed by a moving entity 200 such as an aircraft taxing along. The one or more ultra-wideband pulse radio signals are received via one or more antennas of the ultra-wideband module 410 and transform said signal into raw positioning data. The ultra-wideband module 410 comprises besides the one or more antennas and UWB unit a communication unit. The communication unit is adapted to communicate with a computing unit. The computing unit is configured to receive (via the communication unit) and accumulate (in a Data storage) said raw positioning detection data received . The computing unit is also adapted to process the raw positioning data from the communication unit and to deliver positioning data to the communication unit. In the embodiment of Fig.14, the communication unit is adapted to generate LTE (e.g. LTE 4G, LTE 5G) positioning data signals that are beamed/emitted to a position determining unit 700 not shown (not shown) via the one or more antennas. Other means of communication can be foreseen between the ultra-wideband module 410 and position determining unit 700, such as through the power line or using the UWB network formed by a network of ultra-wideband ranging device 400 spread over an airfield. The ranging devices 400 is powered by the airport light-signalling device 801. Besides the ranging device 400 comprises an autonomous power supply 440.

In Fig. 14, one communication unit with an hardware adapted to preform both UWV and LTE communication is presented. Alternatively, a first communication unit with its antenna for the UWB signals and a second communication unit with its antenna for the LTE signals can be foreseen.

In Fig. 14, the ranging device 400 forms an unit that is integrated in a "traditional" airport light-signalling device 801. Control interfaces between the ranging device 400 and the lighting module 810 ensure that the computing unit of ranging device 400 can control the controlling unit of the airport light-signalling device 801. This situation occurs when the light LTE control signals are received remotely via the one or antennas mounted on the ranging device 400 or via the UWB network formed by a network of ultra-wideband ranging devices 400.

A position determining unit 700 adapted to cooperate with the ranging device 400 of the airport light-signalling device 801 of Fig. 14 can comprise communication unit configured to exchange data wirelessly with the airfield device 801, in particular WiFi, LTE 4G, LTE 5G.

The position determining unit 700 comprises a centralized processor being configured to receive said positioning data send by the ranging devices 400 of the airport light-signalling device 801 and to determine therefrom a positioning of the above mentioned moving entity 200, namely an aircraft, based on said positioning data. The centralized processor can be configured to compare the positioning data sent by the ranging devices 400 of the airfield devices with data containing the predefined location of the airport light-signalling devices 801 spread over an airfield.

The centralized processor can be configured to identify the entity of the above mentioned moving entity 200 using the positioning data sent by the ranging devices 400 of the airport light-signalling device 801 .

The centralized processor can be configured to merge the positioning data sent by the ranging devices 400 of the airfield devices to achieve high accuracy in the position calculation.

The centralized processor can be provided with a memory to store the calculated positions and the time of calculation of the above mentioned moving entity 200.

The centralized processor can be configured to process some or all calculated positions of the above mentioned moving entity 200, to calculate in a configurable time window with positions previously calculated and stored in the memory and to associate the ones related to the above mentioned moving entity 200.

The centralized processor can be configured to fuse and smooth the positions associated to the same target and generate a single final position update via a tracking filter, in particular Kalman filtering.

The centralized processor can be configured to transmit all smoothed or new calculated positions of the above mentioned moving entity 200 to an external user or higher level system such as the central monitoring unit 900.

**0086]** The system according to the invention can also track several moving entities of different natures (e.g. pedestrian or airplane). Furthermore, the network of ranging devices 400 can be supplemented with moving entities configured to exchange positioning data with the centralized processor.

## Claims

1. Ultra-wideband positioning system (100) for determining a position of at least one entity (200) on an airport field comprising at least one of a manoeuvring area (310, 320) and an apron (350), said system comprising:
- at least one airport light-signalling device (801), in particular an approach light, a runway light, a taxiway light, an elevated light, an inset light, a light box, or a visual docking guidance system, said device (801) being located on or around the least one of the manoeuvring area (310, 320) and the apron (350);
- wherein the at least one airport light-signalling device (801) comprises a positioning unit (400) being arranged in or on the at least one airport light-signalling device (801), said unit (400) comprising an ultra-wideband module (410) configured to at least:
- transmit at least one ultra-wideband pulse radio outbound signal (501, 502), in particular in direction of the at least one entity (200) and to receive at least one ultra-wideband pulse radio signal (601, 602, 602', 603) sent spontaneously, returned or echoed by the at least one entity (200),
or
- receive at least one ultra-wideband pulse radio signal (601, 602, 602', 603) sent spontaneously, returned, or echoed by the at least one entity (200);
- a position determining unit (700) in data communication with the positioning unit (400) of the at least one airport light-signalling device (801), said position determining unit (700) being configured to calculate the position of the at least one entity (200) using positioning data extracted at least from the at least one ultra-wideband pulse radio signal (601, 602, 602', 603) sent spontaneously, returned or echoed by the at least one entity (200),
wherein the positioning unit (400) of the at least one airport light-signalling device (801) comprises a first communication unit (460) that is configured for ultra-wideband data communication with the at least one entity (200).

2. Ultra-wideband positioning system (100) of claim 1, further comprising:
- at least one airport visual-signalling device (801), in particular a sign, or at least one airport surveillance stationary device (802), in particular a multilateration antenna mast being located on or around the least one of the manoeuvring area (310, 320) and the apron (350);
- wherein the at least one airport visual-signalling device (801) or the at least one airport surveillance stationary device (802) comprises a positioning unit (400) being arranged in or on said device (801, 802), said unit (400) comprising an ultra-wideband module (410) configured to at least:
- transmit at least one ultra-wideband pulse radio outbound signal (501, 502), in particular in direction of the at least one entity (200) and to receive at least one ultra-wideband pulse radio signal (601, 602, 602', 603) sent spontaneously, returned or echoed by the at least one entity (200),
or
- receive at least one ultra-wideband pulse radio signal (601, 602, 602', 603) sent spontaneously, returned, or echoed by the at least one entity (200),
- wherein the position determining unit (700) is in data communication with the positioning unit (400) of said device (801, 802), said position determining unit (700) being configured to calculate the position of the at least one entity (200) using positioning data extracted at least from said ultra-wideband pulse radio signal (601, 602, 602', 603) sent spontaneously, returned or echoed by the at least one entity (200).

3. Ultra-wideband positioning system (100) of any one of the preceding claims, wherein the at least one entity (200) comprises at least one moving entity (200) on the airfield, preferably an airplane (200), a ground vehicle (200), a mobile phone (200) or a pedestrian (200) wearing a tag, preferably said entity (200) being provided with an ultra-wideband communication module (210) configured to exchange at least one of identification and position data with the ultra-wideband positioning system (100).

4. Ultra-wideband positioning system (100) of any one of the preceding claims, wherein the at least one entity comprises at least one fix entity (200), in particular Foreign Object Debris (FOD) (200).

5. Ultra-wideband positioning system (100) of any one of the preceding claims, wherein the at least one ultra-wideband pulse radio outbound signal comprises a first ultra-wideband pulse outbound signal (501) transmitted by the positioning unit (400) of the at least one airport light-signalling device (801), said signal (501) being a ranging signal, and the at least one ultra-wideband pulse radio signal (601, 602, 602', 603) sent spontaneously, returned or echoed by the at least one entity (200) comprises a first ultra-wideband pulse radio signal (601) echoed by the at least one entity (200), said signal (200) being an echoed signal of the said first signal bouncing back on the at least one entity (200).

6. Ultra-wideband positioning system (100) of any one of the preceding claims, wherein the position determining unit (700) or the positioning unit (400) of the at least one airport light-signalling device (801) is configured to determine a range of the least one entity (200) relative to the positioning unit (400) of the at least one airport light-signalling device (801) using a time of flight of the at least one ultra-wideband pulse radio outbound (501, 502) and the at least one ultra-wideband pulse radio signal (601, 602) returned or echoed signals (601, 602) by the least one entity (200).

7. Ultra-wideband positioning system (100) of any one of the preceding claims, wherein the at least one ultra-wideband pulse radio outbound signal comprises a second ultra-wideband pulse outbound signal (502) transmitted by the positioning unit (400) of the at least one airport light-signalling device (801), said signal being a poll signal, and the at least one ultra-wideband pulse radio signal (601, 602, 602', 603) sent spontaneously, returned or echoed by the at least one entity (200) comprises a second ultra-wideband pulse signal (602) returned by the at least one entity (200), said signal (602) being a response signal sent by the at least one entity (200).

8. Ultra-wideband positioning system (100) of any one of the preceding claims, wherein the at least one ultra-wideband pulse radio signal (602, 602') spontaneously sent or returned (602, 602') by the at least one entity (200), in particular the second ultra-wideband pulse radio signal (602) returned, comprises position data of the at least one entity (200) and the ultra-wideband positioning system (100) is configured to transfer the position data from the positioning (400) unit of the at least one airport light-signalling device (801) to the position determining unit (700).

9. Ultra-wideband positioning system (100) of any one of the preceding claims, wherein the positioning unit (400) of the at least one airport light-signalling device (801) comprises at least three positioning units (400), wherein the at least one ultra-wideband pulse radio signal (601, 602, 602', 603) sent spontaneously, returned or echoed by the at least one entity (200) comprises a third ultra-wideband pulse radio (603) signal sent spontaneously or returned by the at least one entity (200) being received by the at least three positioning units and the position determining unit (700) being configured to determine the position of the at least one entity (200) using the time difference of arrivals of the third ultra-wideband pulse radio signal sent spontaneously or returned by the at least three positioning units (400).

10. Ultra-wideband positioning system (100) of any one of the preceding claims, wherein the at least one ultra-wideband pulse radio signal (601, 602, 602', 603) sent spontaneously, returned or echoed by the at least one entity (200) comprises a fourth ultra-wideband pulse signal sent spontaneously or returned by the at least one entity (200) being received by the ultra-wideband module (410) of the positioning unit (400) of the at least one airport light-signalling device (801), said ultra-wideband module (410) comprising a multi-antenna receiver with at least two antennas and the position determining unit (700) or the positioning unit (400) of the at least one airport light-signalling device (801) is configured to determine the position of the at least one entity using the phase difference of arrivals of the fourth ultra-wideband pulse radio signal sent spontaneously or returned by the at least one entity (200) at the at least two antennas.

11. Ultra-wideband positioning system (100) of any one of the preceding claims, wherein the first communication unit (460) is configured for ultra-wideband data communication with another one of the positioning unit (400) of the at least one airport light-signalling device (801), preferably through the ultra-wideband module (410) of the at least one positioning unit (400).

12. Ultra-wideband positioning system (100) of any one of the preceding claims, wherein the positioning unit (400) of the at least one airport light-signalling device (801) comprises at least a first group of the positioning units (400) arranged in cluster like structure to cover a first zone of interest, said ultra-wideband positioning system (100) comprising a first relay communication unit (450), wherein a first positioning unit of the first group is positioned within a ultra-wideband coverage range of the first relay communication unit (450), said first relay communication unit (450) being operably coupled to the positioning determination unit (700) and configured for data communication with the first positioning unit (400) of the first group using ultra-wideband signals.

13. Ultra-wideband positioning system (100) according to any of the preceding claims, wherein the at least one entity (200) comprises at least one first entity (200),
- wherein the positioning unit (400) of the at least one airport light-signalling device (801) further comprises
- at least one communication unit for wire or wireless communication, in particular ultra-wide band or LTE communication, said device/unit being configured to transfer positioning data to the position determining unit (700),
- a computing unit configured to receive and accumulate said raw positioning detection data received from the ultra-wideband module (410), to process raw positioning data and to deliver positioning data, in particular time of flight range data and/or position data of the at least one first entity (200) to said communication unit;
- a power supply (440);
- wherein the position determining unit (700) comprises
- at least one communication unit configured to exchange data with said airport light-signalling device (801);
- a centralized processor being configured to receive said positioning data of the at least one first entity (200) send by the positioning unit (400) of the at least one airport light-signalling device (801) and to calculate a positioning of the at least one first entity (200) based on said positioning data.

14. Ultra-wideband positioning system (100) according to the preceding claim in combination with claim 2 ,
- wherein the positioning unit (400) of the at least one at least one airport visual-signalling device (801) or the at least one airport surveillance stationary device (802), further comprises
- at least one communication unit for wire or wireless communication, in particular ultra-wide band or LTE communication, said unit being configured to transfer positioning data to the position determining unit (700),
- a computing unit configured to receive and accumulate said raw positioning detection data received from the ultra-wideband module (410), to process raw positioning data and to deliver positioning data in particular time of flight range data and/or position data of the at least one first entity (200) to said communication unit;
- a power supply (440);
- wherein the at least one communication unit of the position determining unit (700) is configured to exchange data with said airport visual-signalling device (801) or said airport surveillance stationary device (802) and the centralized processor is configured to receive said positioning data of the at least one first entity (200) send by the positioning unit (400) of said airport visual-signalling device (801) or said airport surveillance stationary device (802) and to calculate the positioning of the at least one first entity (200) based on said positioning data.

15. Ultra-wideband positioning system (100) according to Claim 13 or Claim 14,
- wherein the at least one entity (200) comprises at least one second entity (200), said system (100) comprising said entity (200), wherein the at least one second entity (200) is configured to receive at least one ultra-wideband pulse radio signal emitted or echoed by the at least one first entity (200), to transform said signal into positioning data, in particular time of flight range data and/or position data of the at least first entity (200) and to transfer the positioning data to the position determining unit (700) preferably via the positioning unit (400) of the at least one airport light-signalling device (801);
- wherein the at least one communication unit of the position determining unit (700) is configured to exchange data with the at least one second entity (200) and the centralized processor is configured to receive said positioning data of the at least one first entity (200) send by the positioning unit (400) of the least one second entity (200), and to calculate the positioning of the at least one first entity (200) based on said positioning data.

16. Ultra-wideband positioning system according to any of the Claims 13 to 15, wherein the at least one airport light-signalling device (801) comprises a controlling unit for controlling at least one light source, said controlling unit being connected to a first interface, wherein the positioning unit (400) of the at least one airport light-signalling device (801) comprises a second interface connected to the computing unit of the at least one airport light-signalling device (801), wherein the first and second interfaces being operatively connected in use.

17. Ultra-wideband positioning system according to any of the Claims 13 to 16, wherein the centralized processor (700) is configured to compare the positioning data sent by the positioning unit (400) of the at least one airport light-signalling device (801) with data containing the predefined location of the at least one airport light-signalling device (801).

18. Ultra-wideband positioning system according to any of Claims 13 to 17, wherein the centralized processor is configured to identify the entity of the at least one first entity (200) using the positioning data sent by the positioning unit(400) of the at least one airport light-signalling device (801).

19. Ultra-wideband positioning system according to any of Claims 13 to 18, wherein the centralized processor is configured to merge the positioning data send by the positioning unit (400) of the at least one airport light-signalling device (801), and optionally at least one of : the at least one at least one airport visual-signalling device (801), the at least one airport surveillance stationary device (802) and/or the at least one second entity (200), to achieve high accuracy in the position calculation.

20. Ultra-wideband positioning system according to any of Claims 13 to 19, wherein the centralized processor is provided with a memory to store the calculated positions and the time of calculation of the at least one first entity (200).

21. Ultra-wideband positioning system according to any of Claims 13 to 20, wherein the centralised processor is configured to process some or all calculated positions of the at least one first entity (200), to calculate in a configurable time window with positions previously calculated and stored in the memory and to associate the ones related to the at least one first entity (200).

22. Ultra-wideband positioning system according to any of Claims 13 to 21, wherein the centralized processor is configured to fuse and smooth the positions associated to the same target and generate a single final position update of the at least one first entity (200) via a tracking filter, in particular Kalman filtering.

23. Surveillance system for an airport field, comprising at least one ultra-wideband positioning system (100) according to any one of the preceding claims, said ultra-wideband positioning system (100) comprising a position determining unit (700) and the positioning unit (400) of the at least one airport light-signalling device (801), said surveillance system further comprising a central monitoring unit (900) being configured to monitor at least one entity (200) on the airport field including at least one of a manoeuvring area (310, 320) and an apron (350), said central monitoring unit (900) being configured for data communication with the position determining unit (700), said position determining unit (700) being configured to send ultra-wideband positioning data extracted from positioning data received from the positioning unit (400) of the at least one at least one airport light-signalling device (801).

24. Surveillance system of the preceding claim, further comprising:
- a surface movement positioning system (1100) provided with at least one surface movement radar system (1400) operably connected to a surface movement positioning determining unit (1700), said positioning determining unit (1700) being in data communication with the central monitoring unit (900) for communicating surface movement positioning data from the at least one entity (200), and/or
- a multilateration positioning system (2000) provided with at least one multilateration antenna system (2400) operably connected to a multilateration positioning determining unit (2700), said positioning determining unit (2700) being in data communication with the central monitoring unit (900) for communicating multilateration positioning data from the at least one entity (200), wherein the central monitoring unit (900) is configured to determine a position of the at least one entity (200) using the merging of the ultra-wideband based positioning data and at least one of the multilateration positioning data and the surface movement positioning data.

25. Surveillance system of the previous claim, wherein the central monitoring unit (900) can be configured to validate the position of the at least one entity (200) based on the ultra-wideband positioning data, and optionally on the at least one of the multilateration and ADS_B positioning data and the surface movement positioning data.

## Patentansprüche

1. Ultrabreitband-Positionierungssystem (100) zum Bestimmen einer Position von mindestens einer Entität (200) auf einem Flughafenfeld, umfassend mindestens eines von einem Manövrierbereich (310, 320) und einem Vorfeld (350), das besagte System umfassend:
- mindestens eine Flughafen-Lichtsignalvorrichtung (801), insbesondere ein Anfluglicht, ein Landebahnlicht, ein Rollfeldlicht, ein Höhenlicht, ein Einsetzlicht, ein Lichtkasten oder ein optisches Andockleitsystem, wobei sich die besagte Vorrichtung (801) auf oder in der Nähe des mindestens einen von dem Manövrierbereich (310, 320) und dem Vorfeld (350) befindet;
- wobei die mindestens eine Flughafen-Lichtsignalvorrichtung (801) eine Positionierungseinheit (400) umfasst, die in oder an der mindestens einen Flughafen-Lichtsignalvorrichtung (801) angeordnet ist, die besagte Einheit (400) umfassend ein Ultrabreitbandmodul (410), das zu mindestens Folgendem konfiguriert ist:
- Übertragen mindestens eines Ultrabreitband-Impulsfunkausgangssignals (501, 502), insbesondere in Richtung der mindestens einen Entität (200), und Empfangen mindestens eines Ultrabreitband-Impulsfunksignals (601, 602, 602', 603), das von der mindestens einen Entität (200) spontan gesendet, zurückgegeben oder zurückgeworfen wird, oder
- Empfangen mindestens eines Ultrabreitband-Impulsfunksignals (601, 602, 602', 603), das von der mindestens einen Entität (200) spontan gesendet, zurückgegeben oder zurückgeworfen wird;
- eine Positionsbestimmungseinheit (700) in Datenkommunikation mit der Positionierungseinheit (400) der mindestens einen Flughafen-Lichtsignalvorrichtung (801), wobei die besagte Positionsbestimmungseinheit (700) konfiguriert ist, um die Position der mindestens einen Entität (200) unter Verwendung von Positionierungsdaten zu berechnen, die mindestens aus dem mindestens einen Ultrabreitband-Impulsfunksignal (601, 602, 602', 603) extrahiert werden, das von der mindestens einen Entität (200) spontan gesendet, zurückgegeben oder zurückgeworfen wird,
wobei die Positionierungseinheit (400) der mindestens einen Flughafen-Lichtsignalvorrichtung (801) eine erste Kommunikationseinheit (460), die für Ultrabreitband-Datenkommunikation mit der mindestens einen Entität (200) konfiguriert ist, umfasst.

2. Ultrabreitband-Positionierungssystem (100) nach Anspruch 1, ferner umfassend:
- mindestens eine optische Flughafen- Signalvorrichtung (801), insbesondere ein Schild, oder mindestens eine stationäre Flughafenüberwachungsvorrichtung (802), insbesondere ein Multilateration-Antennenmast, die sich auf dem oder in der Nähe des Manövrierbereichs (310, 320) und/oder des Vorfelds (350) befindet;
- wobei die mindestens eine optische Flughafensignalvorrichtung (801) oder die mindestens eine stationäre Flughafenüberwachungsvorrichtung (802) eine Positionierungseinheit (400) umfasst, die in oder an der besagten Vorrichtung (801, 802) angeordnet ist, die besagte Einheit (400) umfassend ein Ultrabreitbandmodul (410), das mindestens zu Folgendem konfiguriert ist:
- Übertragen mindestens eines Ultrabreitband-Impulsfunkausgangssignals (501, 502), insbesondere in Richtung der mindestens einen Entität (200), und Empfangen mindestens eines Ultrabreitband-Impulsfunksignals (601, 602, 602', 603), das von der mindestens einen Entität (200) spontan gesendet, zurückgegeben oder zurückgeworfen wird, oder
- Empfangen mindestens eines Ultrabreitband-Impulsfunksignals (601, 602, 602', 603), das von der mindestens einen Entität (200) spontan gesendet, zurückgegeben oder zurückgeworfen wird,
- wobei die Positionsbestimmungseinheit (700) in Datenkommunikation mit der Positionierungseinheit (400) der besagten Vorrichtung (801, 802) ist, wobei die besagte Positionsbestimmungseinheit (700) konfiguriert ist, um die Position der mindestens einen Entität (200) unter Verwendung von Positionierungsdaten zu berechnen, die mindestens aus dem besagten Ultrabreitband-Impulsfunksignal (601, 602, 602', 603) extrahiert werden, das von der mindestens einen Entität (200) spontan gesendet, zurückgegeben oder zurückgeworfen wird.

3. Ultrabreitband-Positionierungssystem (100) nach irgendeinem der vorherigen Ansprüche, wobei die mindestens eine Entität (200) mindestens eine sich bewegende Entität (200) auf dem Flugfeld umfasst, vorzugsweise ein Flugzeug (200), ein Bodenfahrzeug (200), ein Mobiltelefon (200) oder einen Fußgänger (200), der einen Anhänger trägt, wobei die Entität (200) vorzugsweise mit einem Ultrabreitband-Kommunikationsmodul (210) versehen ist, das konfiguriert ist, um mindestens eines von Identifizierungs- und Positionsdaten mit dem Ultrabreitband-Positionierungssystem (100) auszutauschen.

4. Ultrabreitband-Positionierungssystem (100) nach irgendeinem der vorherigen Ansprüche, wobei die mindestens eine Entität mindestens eine feste Entität (200), insbesondere Fremdkörpertrümmer (FOD) (200), umfasst.

5. Ultrabreitband-Positionierungssystem (100) nach irgendeinem der vorherigen Ansprüche, wobei das mindestens eine Ultrabreitband-Impulsfunkausgangssignal ein erstes Ultrabreitband-Impulsausgangssignal (501) umfasst, das von der Positionierungseinheit (400) der mindestens einen Flughafen-Lichtsignalvorrichtung (801) übertragen wird, wobei das besagte Signal (501) ein Entfernungsmesssignal ist, und das mindestens eine Ultrabreitband-Impulsfunksignal (601, 602, 602', 603), das von der mindestens einen Entität (200) spontan gesendet, zurückgegeben oder zurückgeworfen wird, ein erstes Ultrabreitband-Impulsfunksignal (601) umfasst, das von der mindestens einen Entität (200) zurückgeworfen wird, wobei das besagte Signal (200) ein zurückgeworfenes Signal des besagten ersten Signals ist, das an der mindestens einen Entität (200) zurückprallt.

6. Ultrabreitband-Positionierungssystem (100) nach irgendeinem der vorherigen Ansprüche, wobei die Positionsbestimmungseinheit (700) oder die Positionierungseinheit (400) der mindestens einen Flughafen-Lichtsignalvorrichtung (801) konfiguriert ist, um einen Bereich der mindestens einen Entität (200) in Bezug auf die Positionierungseinheit (400) der mindestens einen Flughafen-Lichtsignalvorrichtung (801) unter Verwendung einer Flugzeit des mindestens einen Ultrabreitband-Impulsfunkausgangs (501, 502) und des mindestens einen Ultrabreitband-Impulsfunksignals (601, 602) zurückgegeben oder zurückgeworfen Signale (601, 602) von der mindestens einen Entität (200) zu bestimmen.

7. Ultrabreitband-Positionierungssystem (100) nach irgendeinem der vorherigen Ansprüche, wobei das mindestens eine Ultrabreitband-Impulsfunkausgangssignal ein zweites Ultrabreitband-Impulsausgangssignal (502) umfasst, das von der Positionierungseinheit (400) der mindestens einen Flughafen-Lichtsignalvorrichtung (801) übertragen wird, das besagte Signal ein Abrufsignal ist, und das mindestens eine Ultrabreitband-Impulsfunksignal (601, 602, 602', 603), das von der mindestens einen Entität (200) spontan gesendet, zurückgegeben oder zurückgeworfen wird, ein zweites Ultrabreitband-Impulssignal (602) umfasst, das von der mindestens einen Entität (200) zurückgegeben wird, wobei das besagte Signal (602) ein Antwortsignal ist, das von der mindestens einen Entität (200) gesendet wird.

8. Ultrabreitband-Positionierungssystem (100) nach irgendeinem der vorherigen Ansprüche, wobei das mindestens eine Ultrabreitband-Impulsfunksignal (602, 602'), das von der mindestens einen Einheit (200) spontan gesendet oder zurückgegeben (602, 602') wird, insbesondere das zweite zurückgegebene Ultrabreitband-Impulsfunksignal (602), Positionsdaten der mindestens einen Entität (200) umfasst und das Ultrabreitband-Positionierungssystem (100) konfiguriert ist, um die Positionsdaten von der Positionierungseinheit (400) der mindestens einen Flughafen-Lichtsignalvorrichtung (801) an die Positionsbestimmungseinheit (700) zu übertragen.

9. Ultrabreitband-Positionierungssystem (100) nach irgend einem der vorherigen Ansprüche, wobei die Positionierungseinheit (400) der mindestens einen Flughafen-Lichtsignalvorrichtung (801) mindestens drei Positionierungseinheiten (400) umfasst, wobei das mindestens eine Ultrabreitband-Impulsfunksignal (601, 602, 602', 603), das von der mindestens einen Entität (200) spontan gesendet, zurückgegeben oder zurückgeworfen wird, ein drittes Ultrabreitband-Impulsfunksignal (603) umfasst, das von der mindestens einen Entität (200) spontan gesendet oder zurückgegeben wird und von den mindestens drei Positionierungseinheiten empfangen wird, und wobei die Positionsbestimmungseinheit (700) konfiguriert ist, um die Position der mindestens einen Entität (200) unter Verwendung der Ankunftszeitdifferenz des dritten Ultrabreitband-Impulsfunksignals zu bestimmen, das von den mindestens drei Positionierungseinheiten (400) spontan gesendet oder zurückgegeben wird.

10. Ultrabreitband-Positionierungssystem (100) nach irgendeinem der vorherigen Ansprüche, wobei das mindestens eine Ultrabreitband-Impulsfunksignal (601, 602, 602', 603), das von der mindestens einen Entität (200) spontan gesendet oder zurückgegeben wird, ein viertes Ultrabreitband-Impulssignal umfasst, das von der mindestens einen Entität (200) spontan gesendet oder zurückgesendet wird und von dem Ultrabreitbandmodul (410) der Positionierungseinheit (400) der mindestens einen Flughafen-Lichtsignalvorrichtung (801) empfangen wird, wobei das besagte Ultrabreitbandmodul (410), umfassend einen Mehrantennenempfänger mit mindestens zwei Antennen und die Positionsbestimmungseinheit (700) oder die Positionierungseinheit (400) der mindestens einen Flughafen-Lichtsignalvorrichtung (801), konfiguriert ist, um die Position der mindestens einen Entität unter Verwendung der Ankunftsphasendifferenz des vierten Ultrabreitband-Impulsfunksignals zu bestimmen, das von der mindestens einen Entität (200) an den mindestens zwei Antennen spontan gesendet oder zurückgegeben wird.

11. Ultrabreitband-Positionierungssystem (100) nach irgendeinem der vorherigen Ansprüche, wobei die erste Kommunikationseinheit (460) für Ultrabreitband-Datenkommunikation mit einer anderen der Positionierungseinheit (400) der mindestens einen Flughafen-Lichtsignalvorrichtung (801), vorzugsweise über das Ultrabreitbandmodul (410) der mindestens einen Positionierungseinheit (400), konfiguriert ist.

12. Ultrabreitband-Positionierungssystem (100) nach irgendeinem der vorherigen Ansprüche, wobei die Positionierungseinheit (400) der mindestens einen Flughafen-Lichtsignalvorrichtung (801) mindestens eine erste Gruppe der Positionierungseinheiten (400) umfasst, die in einer gruppenartigen Struktur angeordnet sind, um eine erste Zone von Interesse abzudecken, das besagte Ultrabreitband-Positionierungssystem (100) umfassend eine erste Weiterleitungskommunikationseinheit (450), wobei eine erste Positionierungseinheit der ersten Gruppe innerhalb eines Ultrabreitband-Abdeckungsbereichs der ersten Weiterleitungskommunikationseinheit (450) positioniert ist, wobei die besagte erste Weiterleitungskommunikationseinheit (450) funktionsfähig mit der Positionsbestimmungseinheit (700) gekoppelt und zur Datenkommunikation mit der ersten Positionierungseinheit (400) der ersten Gruppe unter Verwendung von Ultrabreitbandsignalen konfiguriert ist.

13. Ultrabreitband-Positionierungssystem (100) nach irgendeinem der vorherigen Ansprüche, wobei die mindestens eine Entität (200) mindestens eine erste Entität (200) umfasst,
- wobei die Positionierungseinheit (400) der mindestens einen Flughafen-Lichtsignalvorrichtung (801) ferner Folgendes umfasst:
- mindestens eine Kommunikationseinheit für drahtgebundene oder drahtlose Kommunikation, insbesondere Ultrabreitband- oder LTE-Kommunikation, umfasst, wobei die besagte Vorrichtung/Einheit konfiguriert ist, um Positionierungsdaten an die Positionsbestimmungseinheit (700) zu übertragen,
- eine Recheneinheit, die konfiguriert ist, um die von dem Ultrabreitbandmodul (410) empfangenen besagten rohen Positionierungserfassungsdaten zu empfangen und zu akkumulieren, rohe Positionierungsdaten zu verarbeiten und Positionierungsdaten, insbesondere Flugzeit-Entfernungsdaten und/oder Positionsdaten der mindestens einen ersten Entität (200) an die besagte Kommunikationseinheit zuzuführen;
- eine Stromversorgung (440);
- wobei die Positionsbestimmungseinheit (700) Folgendes umfasst
- mindestens eine Kommunikationseinheit, die konfiguriert ist, um Daten mit der besagten Flughafen-Lichtsignalvorrichtung (801) auszutauschen;
- einen zentralisierten Prozessor, der konfiguriert ist, um die besagte Positionierungsdaten der mindestens einen ersten Entität (200) zu empfangen, die von der Positionierungseinheit (400) der mindestens einen Flughafen-Lichtsignalvorrichtung (801) gesendet werden, und um eine Positionierung der mindestens einen ersten Entität (200) basierend auf den besagten Positionierungsdaten zu berechnen.

14. Ultrabreitband-Positionierungssystem (100) nach dem vorherigen Anspruch in Verbindung mit Anspruch 2,
- wobei die Positionierungseinheit (400) der mindestens einen optischen Flughafensignalvorrichtung (801) oder der mindestens einen stationären Flughafenüberwachungsvorrichtung (802) ferner Folgendes umfasst
- mindestens eine Kommunikationseinheit für drahtgebundene oder drahtlose Kommunikation, insbesondere Ultrabreitband- oder LTE-Kommunikation, wobei die besagte Einheit konfiguriert ist, um Positionierungsdaten an die Positionsbestimmungseinheit (700) zu übertragen,
- eine Recheneinheit, die konfiguriert ist, um die von dem Ultrabreitbandmodul (410) empfangenen besagten rohen Positionierungserfassungsdaten zu empfangen und zu akkumulieren, rohe Positionierungsdaten zu verarbeiten und Positionierungsdaten, insbesondere Flugzeit-Entfernungsdaten und/oder Positionsdaten der mindestens einen ersten Entität (200) an die Kommunikationseinheit zuzuführen;
- eine Stromversorgung (440);
- wobei die mindestens eine Kommunikationseinheit der Positionsbestimmungseinheit (700) konfiguriert ist, um Daten mit der besagten optischen Flughafensignalvorrichtung (801) oder der besagten stationären Flughafenüberwachungsvorrichtung (802) auszutauschen und der zentralisierte Prozessor konfiguriert ist, um die besagte Positionierungsdaten der mindestens einen ersten Entität (200) zu empfangen, die von der Positionierungseinheit (400) der besagten optischen Flughafensignalvorrichtung (801) oder der besagten stationären Flughafenüberwachungsvorrichtung (802) gesendet werden, und um die Positionierung der mindestens einen ersten Entität (200) basierend auf den Positionierungsdaten zu berechnen.

15. Ultrabreitband-Positionierungssystem (100) nach Anspruch 13 oder Anspruch 14,
- wobei die mindestens eine Entität (200) mindestens eine zweite Entität (200) umfasst, das besagte System (100) umfassend die besagte Entität (200), wobei die mindestens eine zweite Entität (200) konfiguriert ist, um mindestens ein Ultrabreitband-Impulsfunksignal zu empfangen, das von der mindestens einen ersten Entität (200) emittiert oder zurückgeworfen wird, um dias besagte Signal in Positionsdaten, insbesondere Flugzeit-Entfernungsdaten und/oder Positionsdaten der mindestens ersten Entität (200) umzuwandeln und die Positionierungsdaten vorzugsweise über die Positionierungseinheit (400) der mindestens einen Flughafen-Lichtsignalvorrichtung (801) an die Positionsbestimmungseinheit (700) zu übertragen;
- wobei die mindestens eine Kommunikationseinheit der Positionsbestimmungseinheit (700) konfiguriert ist, um Daten mit der mindestens einen zweiten Entität (200) auszutauschen, und der zentralisierte Prozessor konfiguriert ist, um die besagte Positionierungsdaten der mindestens einen ersten Entität (200) zu empfangen, die von der Positionierungseinheit (400) der mindestens einen zweiten Entität (200) gesendet werden, und um die Positionierung der mindestens einen ersten Entität (200) basierend auf den besagten Positionierungsdaten zu berechnen.

16. Ultrabreitband-Positionierungssystem nach irgendeinem der Ansprüche 13 bis 15, wobei die mindestens eine Flughafen-Lichtsignalvorrichtung (801) eine Steuereinheit zum Steuern mindestens einer Lichtquelle umfasst, wobei die besagte Steuereinheit mit einer ersten Schnittstelle verbunden ist, wobei die Positionierungseinheit (400) der mindestens einen Flughafen-Lichtsignalvorrichtung (801) eine zweite Schnittstelle umfasst, die mit der Recheneinheit der mindestens einen Flughafen-Lichtsignalvorrichtung (801) verbunden ist, wobei die erste und die zweite Schnittstelle im Gebrauch funktionsfähig verbunden sind.

17. Ultrabreitband-Positionierungssystem nach irgendeinem der Ansprüche 13 bis 16, wobei der zentralisierte Prozessor (700) konfiguriert ist, um die Positionierungsdaten, die von der Positionierungseinheit (400) der mindestens einen Flughafen-Lichtsignalvorrichtung (801) gesendet werden, mit Daten zu vergleichen, die den vordefinierten Standort der mindestens einen Flughafen-Lichtsignalvorrichtung (801) enthalten.

18. Ultrabreitband-Positionierungssystem nach irgendeinem der Ansprüche 13 bis 17, wobei der zentralisierte Prozessor konfiguriert ist, um die Entität der mindestens einen ersten Entität (200) unter Verwendung der Positionierungsdaten, die von der Positionierungseinheit (400) der mindestens einen Flughafen-Lichtsignalvorrichtung (801) gesendet werden, zu identifizieren.

19. Ultrabreitband-Positionierungssystem nach irgendeinem der Ansprüche 13 bis 18, wobei der zentralisierte Prozessor konfiguriert ist, um die Positionierungsdaten, die von der Positionierungseinheit (400) der mindestens einen Flughafen-Lichtsignalvorrichtung (801) gesendet werden, und optional mindestens eines von Folgenden: der mindestens einen optischen Flughafensignalvorrichtung (801), der mindestens einen stationären Flughafenüberwachungsvorrichtung (802) und/oder der mindestens einen zweiten Entität (200) zusammenzuführen, um eine hohe Genauigkeit bei der Positionsberechnung zu erreichen.

20. Ultrabreitband-Positionierungssystem nach irgendeinem der Ansprüche 13 bis 19, wobei der zentralisierte Prozessor mit einem Speicher versehen ist, um die berechneten Positionen und den Berechnungszeitpunkt der mindestens einen ersten Entität (200) zu speichern.

21. Ultrabreitband-Positionierungssystem nach irgendeinem der Ansprüche 13 bis 20, wobei der zentralisierte Prozessor konfiguriert ist, um einige oder alle berechneten Positionen der mindestens einen ersten Entität (200) zu verarbeiten, um in einem konfigurierbaren Zeitfenster mit zuvor berechneten und im Speicher gespeicherten Positionen zu rechnen und um jene, die mit der mindestens einen ersten Entität (200) verbunden sind, zu assoziieren.

22. Ultrabreitband-Positionierungssystem nach irgendeinem der Ansprüche 13 bis 21, wobei der zentralisierte Prozessor konfiguriert ist, um die Positionen, die mit demselben Ziel assoziiert sind, zu verschmelzen und zu glätten, und um eine einzige endgültige Positionsaktualisierung der mindestens einen ersten Entität (200) über einen Verfolgungsfilter, insbesondere Kalman-Filterung, zu erzeugen.

23. Überwachungssystem für ein Flughafenfeld, umfassend mindestens ein Ultrabreitband-Positionierungssystem (100) nach irgendeinem der vorherigen Ansprüche, das besagte Ultrabreitband-Positionierungssystem (100) umfassend eine Positionsbestimmungseinheit (700) und die Positionierungseinheit (400) der mindestens einen Flughafen-Lichtsignalvorrichtung (801), das besagte Überwachungssystem ferner umfassend eine zentrale Überwachungseinheit (900), die konfiguriert ist, um mindestens eine Entität (200) auf dem Flughafenfeld, das mindestens eines von einem Manövrierbereich (310, 320) und einem Vorfeld (350) umfasst, zu überwachen, wobei die besagte zentrale Überwachungseinheit (900) zur Datenkommunikation mit der Positionsbestimmungseinheit (700) konfiguriert ist, wobei die besagte Positionsbestimmungseinheit (700) konfiguriert ist, um Ultrabreitband-Positionierungsdaten, die aus Positionierungsdaten extrahiert sind, die von der Positionierungseinheit (400) der mindestens einen mindestens einen Flughafen-Lichtsignalvorrichtung (801) empfangen werden, zu senden.

24. Überwachungssystem nach dem vorherigen Anspruch, ferner umfassend:
- ein Oberflächenbewegung-Positionierungssystem (1100), versehen mit mindestens einem Oberflächenbewegung-Radarsystem (1400), das funktionsfähig mit einer Oberflächenbewegung-Positionierungsbestimmungseinheit (1700) verbunden ist, wobei die besagte Positionsbestimmungseinheit (1700) in Datenkommunikation mit der zentralen Überwachungseinheit (900) ist, um Oberflächenbewegung-Positionierungsdaten von der mindestens einen Entität (200) zu übertragen, und/oder
- ein Multilateration-Positionierungssystem (2000), versehen mit mindestens einem Multilateration-Antennensystem (2400), das funktionsfähig mit einer Multilateration-Positionierungsbestimmungseinheit (2700) verbunden ist, wobei die besagte Positionierungsbestimmungseinheit (2700) in Datenkommunikation mit der zentralen Überwachungseinheit (900) ist, um Multilateration-Positionierungsdaten von der mindestens einen Entität (200) zu übertragen, wobei die zentrale Überwachungseinheit (900) konfiguriert ist, um eine Position der mindestens einen Entität (200) unter Verwendung der Zusammenführung der Ultrabreitband-basierten Positionierungsdaten und mindestens einem von den Multilateration-Positionierungsdaten und den Oberflächenbewegungs-Positionierungsdaten zu bestimmen.

25. Überwachungssystem nach dem vorherigen Anspruch, wobei die zentrale Überwachungseinheit (900) konfiguriert sein kann, um die Position der mindestens einen Entität (200) basierend auf den Ultrabreitband-Positionierungsdaten und optional auf mindestens einem der Multilateration- und ADS_B-Positionierungsdaten und der Oberflächenbewegung-Positionierungsdaten zu validieren.

## Revendications

1. Système de positionnement à bande ultra-large (100) pour déterminer la position d'au moins une entité (200) sur un terrain aéroportuaire comprenant au moins l'une d'une aire de manœuvre (310, 320) et d'une aire de trafic (350), ledit système comprenant :
- au moins un dispositif de signalisation lumineuse aéroportuaire (801), notamment un feu d'approche, un feu de piste, un feu de voie de circulation, un feu surélevé, un feu encastré, un caisson lumineux ou un système de guidage visuel d'accostage, ledit dispositif (801) étant situé sur ou autour de l'au moins une de l'aire de manœuvre (310, 320) et de l'aire de trafic (350) ;
- dans lequel l'au moins un dispositif de signalisation lumineuse aéroportuaire (801) comprend une unité de positionnement (400) agencée dans ou sur l'au moins un dispositif de signalisation lumineuse aéroportuaire (801), ladite unité (400) comprenant un module à bande ultra-large (410) configuré pour au moins :
- émettre au moins un signal radio sortant à impulsions à bande ultra-large (501, 502), en particulier en direction d'au moins une entité (200) et recevoir au moins un signal radio à impulsions à bande ultra-large (601, 602, 602', 603) envoyé spontanément, renvoyé ou réfléchi par l'au moins une entité (200), ou
- recevoir au moins un signal radio à impulsions à bande ultra-large (601, 602, 602', 603) envoyé spontanément, renvoyé ou réfléchi par l'au moins une entité (200);
- une unité de détermination de position (700) en communication de données avec l'unité de positionnement (400) de l'au moins un dispositif de signalisation lumineuse aéroportuaire (801), ladite unité de détermination de position (700) étant configurée pour calculer la position de l'au moins une entité (200) à l'aide de données de positionnement extraites au moins de l'au moins un signal radio à impulsions à bande ultra-large (601, 602, 602', 603) envoyé spontanément, renvoyé ou réfléchi par l'au moins une entité (200),
dans lequel l'unité de positionnement (400) de l'au moins un dispositif de signalisation lumineuse aéroportuaire (801) comprend une première unité de communication (460) qui est configurée pour une communication de données à bande ultra-large avec l'au moins une entité (200).

2. Système de positionnement à bande ultra-large (100) selon la revendication 1, comprenant en outre :
- au moins un dispositif de signalisation visuelle aéroportuaire (801), en particulier un panneau, ou au moins un dispositif stationnaire de surveillance aéroportuaire (802), en particulier un mât d'antenne de multilatération, situé sur ou autour de l'au moins une de l'aire de manœuvre (310, 320) et de l'aire de trafic (350) ;
- dans lequel l'au moins un dispositif de signalisation visuelle aéroportuaire (801) ou l'au moins un dispositif stationnaire de surveillance aéroportuaire (802) comprend une unité de positionnement (400) agencée dans ou sur ledit dispositif (801, 802), ladite unité (400) comprenant un module à bande ultra-large (410) configuré pour au moins :
- émettre au moins un signal radio sortant à impulsions à bande ultra-large (501, 502), en particulier en direction de l'au moins une entité (200) et recevoir au moins un signal radio à impulsions à bande ultra-large (601, 602, 602', 603) envoyé spontanément, renvoyé ou réfléchi par l'au moins une entité (200), ou
- recevoir au moins un signal radio à impulsions à bande ultra-large (601, 602, 602', 603) envoyé spontanément, renvoyé ou réfléchi par l'au moins une entité (200),
- dans lequel l'unité de détermination de position (700) est en communication de données avec l'unité de positionnement (400) dudit dispositif (801, 802), ladite unité de détermination de position (700) étant configurée pour calculer la position de l'au moins une entité (200) à l'aide de données de positionnement extraites au moins dudit signal radio à impulsions à bande ultra-large (601, 602, 602', 603) envoyé spontanément, renvoyé ou réfléchi par l'au moins une entité (200).

3. Système de positionnement à bande ultra-large (100) selon l'une quelconque des revendications précédentes, dans lequel l'au moins une entité (200) comprend au moins une entité mobile (200) sur le terrain aéroportuaire, de préférence un avion (200), un véhicule terrestre (200), un téléphone mobile (200) ou un piéton (200) portant une étiquette électronique, de préférence ladite entité (200) étant dotée d'un module de communication à bande ultra-large (210) configuré pour échanger au moins l'une parmi des données d'identification et de position avec le système de positionnement à bande ultra-large (100).

4. Système de positionnement à bande ultra-large (100) selon l'une quelconque des revendications précédentes, dans lequel l'au moins une entité comprend au moins une entité fixe (200), en particulier des débris de corps étrangers (FOD) (200).

5. Système de positionnement à bande ultra-large (100) selon l'une quelconque des revendications précédentes, dans lequel l'au moins un signal radio sortant à impulsions à bande ultra-large comprend un premier signal sortant à impulsions à bande ultra-large (501) émis par l'unité de positionnement (400) de l'au moins un dispositif de signalisation lumineuse aéroportuaire (801), ledit signal (501) étant un signal de télémétrie, et l'au moins un signal radio à impulsions à bande ultra-large (601, 602, 602', 603) envoyé spontanément, renvoyé ou réfléchi par l'au moins une entité (200) comprend un premier signal radio à impulsions à bande ultra-large (601) réfléchi par l'au moins une entité (200), ledit signal (200) étant un signal réfléchi dudit premier signal se réfléchissant sur l'au moins une entité (200).

6. Système de positionnement à bande ultra-large (100) selon l'une quelconque des revendications précédentes, dans lequel l'unité de détermination de position (700) ou l'unité de positionnement (400) de l'au moins un dispositif de signalisation lumineuse aéroportuaire (801) est configurée pour déterminer une distance de l'au moins une entité (200) par rapport à l'unité de positionnement (400) de l'au moins un dispositif de signalisation lumineuse aéroportuaire (801) en utilisant un temps de vol de l'au moins un signal radio sortant à impulsions à bande ultra-large (501, 502) et de l'au moins un signal radio à impulsions à bande ultra-large (601, 602) renvoyé, ou des signaux réfléchis (601, 602) par l'au moins une entité (200).

7. Système de positionnement à bande ultra-large (100) selon l'une quelconque des revendications précédentes, dans lequel l'au moins un signal radio sortant à impulsions à bande ultra-large comprend un deuxième signal sortant à impulsions à bande ultra-large (502) émis par l'unité de positionnement (400) de l'au moins un dispositif de signalisation lumineuse aéroportuaire (801), ledit signal étant un signal de sondage, et l'au moins un signal radio à impulsions à bande ultra-large (601, 602, 602', 603) envoyé spontanément, renvoyé ou réfléchi par l'au moins une entité (200) comprend un deuxième signal à impulsions à bande ultra-large (602) renvoyé par l'au moins une entité (200), ledit signal (602) étant un signal de réponse envoyé par l'au moins une entité (200).

8. Système de positionnement à bande ultra-large (100) selon l'une quelconque des revendications précédentes, dans lequel l'au moins un signal radio à impulsions à bande ultra-large (602, 602') envoyé spontanément ou renvoyé (602, 602') par l'au moins une entité (200), en particulier le deuxième signal radio à impulsions à bande ultra-large (602) renvoyé, comprend des données de position de l'au moins une entité (200), et le système de positionnement à bande ultra-large (100) est configuré pour transférer les données de position de l'unité de positionnement (400) de l'au moins un dispositif de signalisation lumineuse aéroportuaire (801) à l'unité de détermination de position (700).

9. Système de positionnement à bande ultra-large (100) selon l'une quelconque des revendications précédentes, dans lequel l'unité de positionnement (400) de l'au moins un dispositif de signalisation lumineuse aéroportuaire (801) comprend au moins trois unités de positionnement (400), dans lequel l'au moins un signal radio à impulsions à bande ultra-large (601, 602, 602', 603) envoyé spontanément, renvoyé ou réfléchi par l'au moins une entité (200) comprend un troisième signal radio à impulsions à bande ultra-large (603) envoyé spontanément ou renvoyé par l'au moins une entité (200) et reçu par les au moins trois unités de positionnement, et l'unité de détermination de position (700) étant configurée pour déterminer la position de l'au moins une entité (200) à l'aide de la différence de temps entre les arrivées du troisième signal radio à impulsions à bande ultra-large envoyé spontanément ou renvoyé par les au moins trois unités de positionnement (400).

10. Système de positionnement à bande ultra-large (100) selon l'une quelconque des revendications précédentes, dans lequel l'au moins un signal radio à impulsions à bande ultra-large (601, 602, 602', 603) envoyé spontanément, renvoyé ou réfléchi par l'au moins une entité (200) comprend un quatrième signal radio à impulsions à bande ultra-large envoyé spontanément ou renvoyé par l'au moins une entité (200) et reçu par le module à bande ultra-large (410) de l'unité de positionnement (400) de l'au moins un dispositif de signalisation lumineuse aéroportuaire (801), ledit module à bande ultra-large (410) comprenant un récepteur multi-antennes avec au moins deux antennes et l'unité de détermination de position (700) ou l'unité de positionnement (400) de l'au moins un dispositif de signalisation lumineuse aéroportuaire (801) est configurée pour déterminer la position de l'au moins une entité en utilisant la différence de phase entre les arrivées du quatrième signal radio à impulsions à bande ultra-large envoyé spontanément ou renvoyé par l'au moins une entité (200) au niveau des au moins deux antennes.

11. Système de positionnement à bande ultra-large (100) selon l'une quelconque des revendications précédentes, dans lequel la première unité de communication (460) est configurée pour une communication de données à bande ultra-large avec une autre de l'unité de positionnement (400) de l'au moins un dispositif de signalisation lumineuse aéroportuaire (801), de préférence par l'intermédiaire du module à bande ultra-large (410) de l'au moins une unité de positionnement (400).

12. Système de positionnement à bande ultra-large (100) selon l'une quelconque des revendications précédentes, dans lequel l'unité de positionnement (400) de l'au moins un dispositif de signalisation lumineuse aéroportuaire (801) comprend au moins un premier groupe d'unités de positionnement (400) agencées dans une structure en grappe pour couvrir une première zone d'intérêt, ledit système de positionnement à bande ultra-large (100) comprenant une première unité de communication de relais (450), dans lequel une première unité de positionnement du premier groupe est positionnée dans une plage de couverture à bande ultra-large de la première unité de communication de relais (450), ladite première unité de communication de relais (450) étant couplée de manière opérationnelle à l'unité de détermination de positionnement (700) et configurée pour une communication de données avec la première unité de positionnement (400) du premier groupe à l'aide de signaux à bande ultra-large.

13. Système de positionnement à bande ultra-large (100) selon l'une quelconque des revendications précédentes, dans lequel l'au moins une entité (200) comprend au moins une première entité (200),
- dans lequel l'unité de positionnement (400) de l'au moins un dispositif de signalisation lumineuse aéroportuaire (801) comprend en outre
- au moins une unité de communication pour une communication filaire ou sans fil, en particulier une communication à bande ultra-large ou LTE, ledit dispositif/ladite unité étant configuré(e) pour transférer des données de positionnement à l'unité de détermination de position (700),
- une unité informatique configurée pour recevoir et accumuler lesdites données brutes de détection de positionnement reçues du module à bande ultra-large (410), traiter les données brutes de positionnement et délivrer des données de positionnement, en particulier des données de distance par temps de vol et/ou des données de position de l'au moins une première entité (200), à ladite unité de communication ;
- une alimentation électrique (440) ;
- dans lequel l'unité de détermination de position (700) comprend
- au moins une unité de communication configurée pour échanger des données avec ledit dispositif de signalisation lumineuse aéroportuaire (801) ;
- un processeur centralisé configuré pour recevoir lesdites données de positionnement de l'au moins une première entité (200) envoyées par l'unité de positionnement (400) de l'au moins un dispositif de signalisation lumineuse aéroportuaire (801) et pour calculer un positionnement de l'au moins une première entité (200) sur la base desdites données de positionnement.

14. Système de positionnement à bande ultra-large (100) selon la revendication précédente en combinaison avec la revendication 2,
- dans lequel l'unité de positionnement (400) de l'au moins un dispositif de signalisation visuelle aéroportuaire (801) ou de l'au moins un dispositif stationnaire de surveillance aéroportuaire (802) comprend en outre
- au moins une unité de communication pour une communication sans fil ou filaire, en particulier une communication à bande ultra-large ou LTE, ladite unité étant configurée pour transférer des données de positionnement à l'unité de détermination de position (700),
- une unité informatique configurée pour recevoir et accumuler lesdites données brutes de détection de positionnement reçues du module à bande ultra-large (410), traiter les données brutes de positionnement et délivrer des données de positionnement, en particulier des données de distance par temps de vol et/ou des données de position de l'au moins une première entité (200), à ladite unité de communication ;
- une alimentation électrique (440) ;
- dans lequel l'au moins une unité de communication de l'unité de détermination de position (700) est configurée pour échanger des données avec ledit dispositif de signalisation visuelle aéroportuaire (801) ou ledit dispositif stationnaire de surveillance aéroportuaire (802), et le processeur centralisé est configuré pour recevoir lesdites données de positionnement de l'au moins une première entité (200) envoyées par l'unité de positionnement (400) dudit dispositif de signalisation visuelle aéroportuaire (801) ou dudit dispositif stationnaire de surveillance aéroportuaire (802) et pour calculer le positionnement de l'au moins une première entité (200) sur la base desdites données de positionnement.

15. Système de positionnement à bande ultra-large (100) selon la revendication 13 ou 14,
- dans lequel l'au moins une entité (200) comprend au moins une deuxième entité (200), ledit système (100) comprenant ladite entité (200), dans lequel l'au moins une deuxième entité (200) est configurée pour recevoir au moins un signal radio à impulsions à bande ultra-large émis ou réfléchi par l'au moins une première entité (200), transformer ledit signal en données de positionnement, en particulier en données de distance de vol et/ou en données de position de l'au moins première entité (200), et transférer les données de positionnement à l'unité de détermination de position (700), de préférence par l'intermédiaire de l'unité de positionnement (400) de l'au moins un dispositif de signalisation lumineuse aéroportuaire (801) ;
- dans lequel l'au moins une unité de communication de l'unité de détermination de position (700) est configurée pour échanger des données avec l'au moins une deuxième entité (200) et le processeur centralisé est configuré pour recevoir lesdites données de positionnement de l'au moins une première entité (200) envoyées par l'unité de positionnement (400) de l'au moins une deuxième entité (200), et pour calculer le positionnement de l'au moins une première entité (200) sur la base desdites données de positionnement.

16. Système de positionnement à bande ultra-large selon l'une quelconque des revendications 13 à 15, dans lequel l'au moins un dispositif de signalisation lumineuse aéroportuaire (801) comprend une unité de commande pour commander au moins une source lumineuse, ladite unité de commande étant connectée à une première interface, dans lequel l'unité de positionnement (400) de l'au moins un dispositif de signalisation lumineuse aéroportuaire (801) comprend une deuxième interface connectée à l'unité informatique de l'au moins un dispositif de signalisation lumineuse aéroportuaire (801), dans lequel la première et la deuxième interfaces sont connectées de manière opérationnelle en cours d'utilisation.

17. Système de positionnement à bande ultra-large selon l'une quelconque des revendications 13 à 16, dans lequel le processeur centralisé (700) est configuré pour comparer les données de positionnement envoyées par l'unité de positionnement (400) de l'au moins un dispositif de signalisation lumineuse aéroportuaire (801) avec les données contenant l'emplacement prédéfini de l'au moins un dispositif de signalisation lumineuse aéroportuaire (801).

18. Système de positionnement à bande ultra-large selon l'une quelconque des revendications 13 à 17, dans lequel le processeur centralisé est configuré pour identifier l'entité de l'au moins une première entité (200) à l'aide des données de positionnement envoyées par l'unité de positionnement (400) de l'au moins un dispositif de signalisation lumineuse aéroportuaire (801).

19. Système de positionnement à bande ultra-large selon l'une quelconque des revendications 13 à 18, dans lequel le processeur centralisé est configuré pour fusionner les données de positionnement envoyées par l'unité de positionnement (400) de l'au moins un dispositif de signalisation visuelle aéroportuaire (801) et, éventuellement, d'au moins l'un parmi : l'au moins un dispositif de signalisation lumineuse aéroportuaire (801), l'au moins un dispositif stationnaire de surveillance aéroportuaire (802) et/ou l'au moins une deuxième entité (200), afin d'obtenir une précision élevée dans le calcul de position.

20. Système de positionnement à bande ultra-large selon l'une quelconque des revendications 13 à 19, dans lequel le processeur centralisé est doté d'une mémoire permettant de stocker les positions calculées et le temps de calcul de l'au moins une première entité (200).

21. Système de positionnement à bande ultra-large selon l'une quelconque des revendications 13 à 20, dans lequel le processeur centralisé est configuré pour traiter une partie ou la totalité des positions calculées de l'au moins une première entité (200), pour calculer dans une fenêtre temporelle configurable avec des positions précédemment calculées et stockées dans la mémoire et pour associer les positions qui sont connexes à l'au moins une première entité (200).

22. Système de positionnement à bande ultra-large selon l'une quelconque des revendications 13 à 21, dans lequel le processeur centralisé est configuré pour fusionner et lisser les positions associées à la même cible, et pour générer une unique mise à jour de position finale de l'au moins une première entité (200) par l'intermédiaire d'un filtre de suivi, en particulier d'un filtrage de Kalman.

23. Système de surveillance pour un terrain aéroportuaire, comprenant au moins un système de positionnement à bande ultra-large (100) selon l'une quelconque des revendications précédentes, ledit système de positionnement à bande ultra-large (100) comprenant une unité de détermination de position (700) et l'unité de positionnement (400) de l'au moins un dispositif de signalisation lumineuse aéroportuaire (801), ledit système de surveillance comprenant en outre une unité centrale de surveillance (900) configurée pour surveiller au moins une entité (200) sur le terrain aéroportuaire comprenant au moins l'une d'une aire de manœuvre (310, 320) et d'une aire de trafic (350), ladite unité centrale de surveillance (900) étant configurée pour une communication de données avec l'unité de détermination de position (700), ladite unité de détermination de position (700) étant configurée pour envoyer des données de positionnement à bande ultra-large extraites de données de positionnement reçues de l'unité de positionnement (400) de l'au moins un dispositif de signalisation lumineuse aéroportuaire (801).

24. Système de surveillance selon la revendication précédente, comprenant en outre :
- un système de positionnement par mouvement de surface (1100) doté d'au moins un système de radar de mouvement de surface (1400) connecté de manière opérationnelle à une unité de détermination de positionnement par mouvement de surface (1700), ladite unité de détermination de positionnement (1700) étant en communication de données avec l'unité centrale de surveillance (900) pour communiquer des données de positionnement par mouvement de surface provenant de l'au moins une entité (200), et/ou
- un système de positionnement par multilatération (2000) doté d'au moins un système d'antenne de multilatération (2400) connecté de manière opérationnelle à une unité de détermination de positionnement par multilatération (2700), ladite unité de détermination de positionnement (2700) étant en communication de données avec l'unité centrale de surveillance (900) pour communiquer des données de positionnement par multilatération provenant de l'au moins une entité (200), dans lequel l'unité centrale de surveillance (900) est configurée pour déterminer une position de l'au moins une entité (200) à l'aide de la fusion des données de positionnement à bande ultra-large et d'au moins l'une parmi les données de positionnement par multilatération et les données de positionnement par mouvement de surface.

25. Système de surveillance selon la revendication précédente, dans lequel l'unité centrale de surveillance (900) peut être configurée pour valider la position de l'au moins une entité (200) sur la base des données de positionnement à bande ultra-large et, éventuellement, sur la base d'au moins l'une parmi les données de positionnement par multilatération et ADS_B et les données de positionnement par mouvement de surface.
